# EUROPEAN PATENT APPLICATION

(11) **EP 1 357 534 A1**
(43) Date of publication of application: **29.10.2003**
(21) Application number: 02252817.8
(22) Date of filing: 22.04.2002
(51) Int. Cl.: G09G 3/20, G09G 5/36

(54) **Display device with plurality of display modes**

(71) Applicant: TELEFONAKTIEBOLAGET L M ERICSSON (publ), 126 25 Stockholm (SE)
(72) Inventor: Björkengren, Ulf, 237 34 Bjärred (SE)
(74) Representative: O'Connell, David Christopher

(57) **Abstract**

The present invention relates to a display device that can provide multiple display modes allowing the display of images of differing colour depths without requiring additional memory.

In a first display mode, the display system displays an image at a first size and a first colour depth. In a second display mode,.the display system displays an image at a decreased size and an increased colour depth.

## Description

### TECHNICAL FIELD OF THE INVENTION

The invention relates to a display device, and more specifically to a display device that has a limited amount of memory available.

### BACKGROUND TO THE INVENTION

In portable or handheld communications devices, restrictions are often imposed on various aspects of the device such as the amount of power available, the amount of available memory, the size of a display, etc. in order to minimise the size of the device.

In order to reduce the power consumption in a portable communications device that has a display panel, the display memory (otherwise known as a frame buffer) is integrated into the display driver. This leads to a reduced electrical load on the communication channel involved in the display refresh cycle.

Conventionally, display drivers with an integrated frame buffer have a configuration whereby the number of addresses in the buffer corresponds to the number of pixels in the display panel, with each buffer address containing a number of bits representative of the colour depth of the display panel.

Since the spatial resolution and colour depth of display systems in portable devices are constantly increasing, the size of the frame buffer must also increase. This has lead to the problem that the physical size of the buffer has become a major part of the display driver area.

US 5,473,342 to Tse et al. provides a method and apparatus for displaying multiple modes of colour depth and spatial resolution in a single display frame on a desktop computer monitor, without requiring additional memory. The apparatus switches between two output pixel rates such that the amount of display memory used for any predefined screen area remains constant even though the output pixel rate and spatial resolution are dynamically adjusted. A display mode signal is embedded in the display data such that the display data, including the mode signal, comprises one byte of data for each display pixel when the mode signal specifies the first display mode, and comprises two bytes of data when the mode signal specifies the second display mode. However, the same two bytes of data are used for two adjacent pixels.

This therefore allows a portion of the monitor screen to operate at a higher colour depth than the remainder of the screen by reducing the spatial resolution of the screen in that portion.

However, since the display panels of handheld communications devices generally have a spatial resolution that is much lower than that of a desktop computer monitor, the application of this invention to display panels in portable communications devices would have an adverse effect on the clarity of the image.

### SUMMARY OF THE INVENTION

According to the present invention there is provided a display device that is operable in a number of modes, wherein in a first mode the device displays an image at a first size and a first colour depth and in a second mode displays an image at a decreased size and an increased colour depth.

This has the advantage that a single display system can provide multiple display modes allowing the display of images of differing colour depths without requiring additional memory.

Preferably, the device is operable in a third mode, where the device displays an image at a decreased size and an increased colour depth, relative to the second mode. In fact, any desired number of display modes can be provided.

Preferably, the amount of display memory used in each mode is the same.

Preferably, the ratio of image sizes is inversely proportional to the ratio of colour depths for any two modes.

Alternatively, in one mode, the colour depth is predetermined, and the size is calculated such that the amount of display memory used is equal to or less than a display memory capacity.

Alternatively, in one mode, the size is predetermined, and the colour depth is calculated such that the amount of display memory used is equal to or less than a display memory capacity.

Preferably, the spatial resolution is the same in each mode.

Preferably, the plurality of display modes are preprogrammed into the device.

According to a second aspect of the present invention, there is provided a portable communications device that comprises a display device as described above.

Preferably, a user may select the display mode.

Alternatively, a mode may be selected depending upon the status of the device.

'According to a third aspect of the present invention, there is provided a method of operating a display device where the display device comprises a display panel and a display memory, wherein the device is operating in a first display mode and the method comprises the steps of receiving data relating to an image to be displayed; storing the image data in a display memory using an appropriate mapping; retrieving the image data from the display memory according to the display panel mapping and applying the data to the appropriate lines on the display panel.

The display panel mappings comprise information regarding the storage of image data in the display memory according to the display mode.

Preferably, when data is received that relates to a mode control signal, the method further comprises the steps of determining from the received mode control signal that the display device should operate in a second display mode; determining the mapping required for storing image data in the second mode; synchronising the storing of the image data with a display panel refresh cycle; and storing the image data in the display memory using the mapping appropriate to the second mode.

It should be emphasised that the term "comprises/comprising" when used in this specification is taken to specify the presence of stated features, integers, steps or components but does not preclude the presence or addition of one or more other features, integers, steps, components or groups thereof.

### BRIEF DESCRIPTION OF THE DRAWINGS

Figure 1 shows a mobile phone in accordance with a first embodiment of the present invention.
'Figure 2 shows the mobile phone of Figure 1 in a second mode of operation.
Figure 3 is a block schematic of a mobile phone in accordance with the invention.
Figure 4 is a flow chart showing the operation of the display system in accordance with the invention.
Figures 5a and 5b show a frame buffer and display panel mapping in accordance with the invention.
Figures 6a and 6b show a frame buffer and display panel mapping for a second mode in accordance with the invention.
Figures 7a and 7b show a frame buffer and display panel mapping for a third mode in accordance with the invention.

### DETAILED DESCRIPTION OF THE PREFERRED EMBODIMENTS

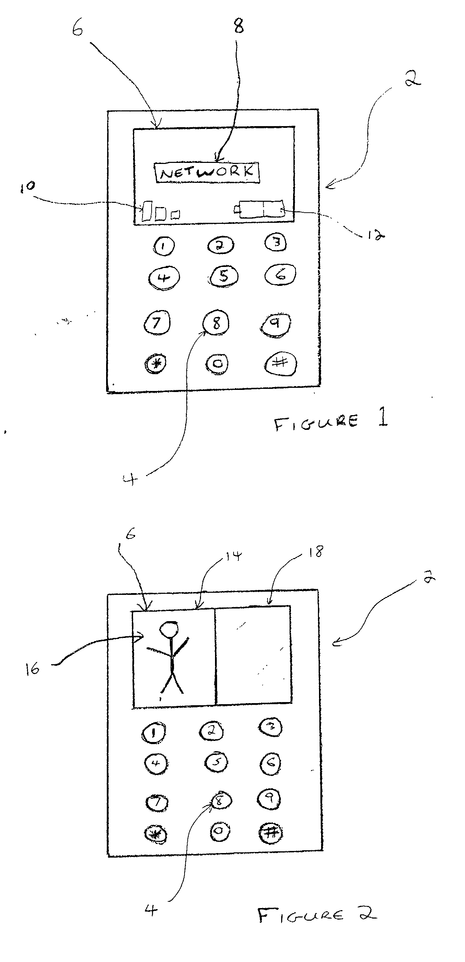

Figure 1 shows a mobile phone in accordance with a first embodiment of the present invention. Although the invention is described herein with reference to a mobile phone, it will be appreciated that the invention is generally applicable to portable communications devices such as mobile radio telephones, pagers, communicators, personal digital assistants (PDAs), electronic organisers, or any other equipment in which it is desirable to provide increased display capability without increasing the size of the associated memory. As is conventional, the mobile phone 2 comprises a keypad 4 and a display panel 6. In this illustrated embodiment, the display panel 6 is a liquid crystal display, although the invention is applicable to all types of display panel.

In accordance with the invention, the display panel 6 is in a first mode of operation, whereby the whole of the display panel 6 is in use. In this mode, the display panel 6 may show information, such as network information 8, signal strength 10 and battery status 12, that do not require a high colour depth. For example, the information may be presented in black and white, or in a few colours.

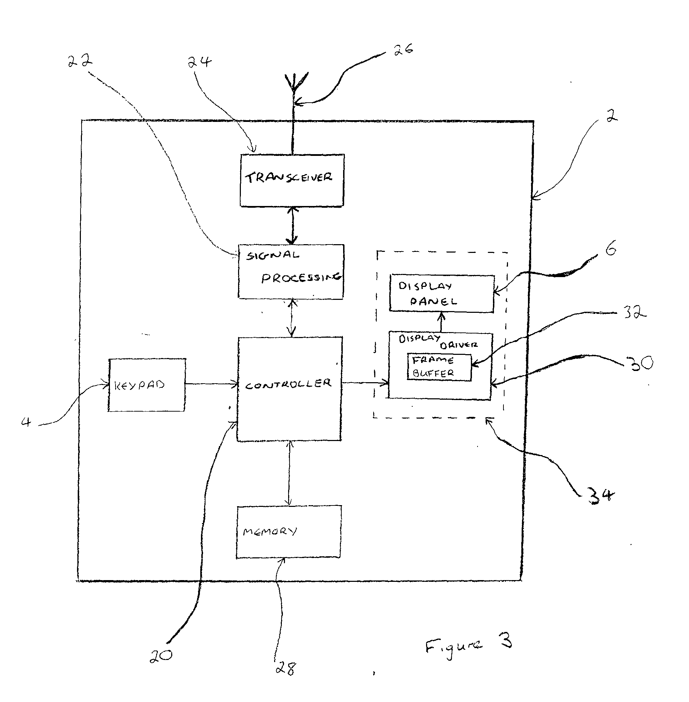

Figure 2 shows the mobile phone of Figure 1 in a second mode of operation. In accordance with the invention, the mobile phone 2 is in a second mode of operation, whereby only half of the display panel 6 is in use. The left half 14 of the display panel 6 is displaying an image 16 which has a colour depth that is twice that available in the first mode of operation, while the right half 18 of the display panel 6 is not used for presenting any image information.

Although it is shown that the display panel 6 is divided vertically into left and right halves, it will be appreciated that the display panel 6 may be divided in any number of different ways to allow an image to be shown at half the normal size and twice the normal colour depth.

In accordance with the invention, the mobile phone 2 may operate in a third mode whereby only a quarter of the display panel 6 is in use. The quarter of the display panel 6 that is displaying an image will have a colour depth that is four times that available in the first mode of operation, while the remaining three quarters of the display panel 6 will not be used for presenting any image information.

Although the invention has been described with reference to three modes, it should be noted that the invention is not limited to just three modes, or to these three modes in particular. The total number of available modes will depend upon the resources available to the device, as a device able to implement many different modes will require more resources than a device capable of operating in just two modes.

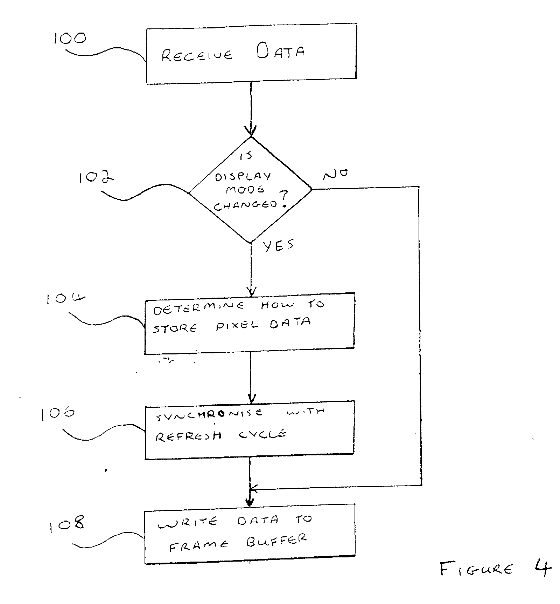

Figure 3 is a block schematic of a mobile phone in accordance with the invention. The mobile phone 2 has a controller 20 that controls the operation of the phone 2. The phone 2 has various functions and features that are conventional, and will not be described further herein. The description below relates only to the features which are required for implementation of the present invention.

The controller 20 is connected to a keypad 4 for receiving user inputs. The controller 20 is in communication with signal processing circuitry 22 that converts signals to and from the formats required for transmission to a network over a wireless interface via transceiver circuitry 24 and an antenna 26.

The controller 20 further communicates with an internal memory device 28, which can be used to store data.

Finally, the controller 20 is connected to a display driver 30 with an integrated frame buffer 32 which forms part of a display system 34. The display system 34 further comprises a display panel 6. The display panel 6 comprises a plurality of pixels arranged into a number of rows and columns.

As is conventional, the frame buffer 32 comprises a plurality of buffer addresses, with each address in the frame buffer 32 able to store a number of bits, and the number of buffer addresses being equal to the number of pixels in the display panel 6.

It will be appreciated that the invention is also applicable to display systems where the number of buffer addresses is not equal to the number of pixels in the display panel.

The display driver 30 receives data for each pixel in an image to be displayed on the display panel 6 from the controller 20. The data comprises information regarding the colour of each pixel in the image. As is conventional, this colour information is represented by a number of bits, with a larger number of bits per pixel indicating an image with a greater colour depth. For example, an image with 8 bits/pixel is capable of displaying 256 different colours, while an image with 16 bits/pixel is capable of displaying 65536 different colours.

The controller 20 may obtain the image data from the network via the antenna 26 and transceiver circuitry 24, as in the case of a video link with another network user. Alternatively, the controller 20 may obtain the image data from the internal memory device 28. Image data stored in the internal memory device 28 may comprise graphical data for use in the normal operation of the phone, or, perhaps, images downloaded from a digital camera.

Alternatively, a user may specify, via the use of a keypad 4, that the display panel 6 should display all images to a minimum colour depth. In this case, the controller 20 provides image data to the display driver 30 with the required colour depth.

Alternatively, the display mode may be selected depending upon a status of the device. One status could be the need to display standard information, such as network information, requiring a low colour depth, while another status could be the need to display a picture that requires a greater colour depth.

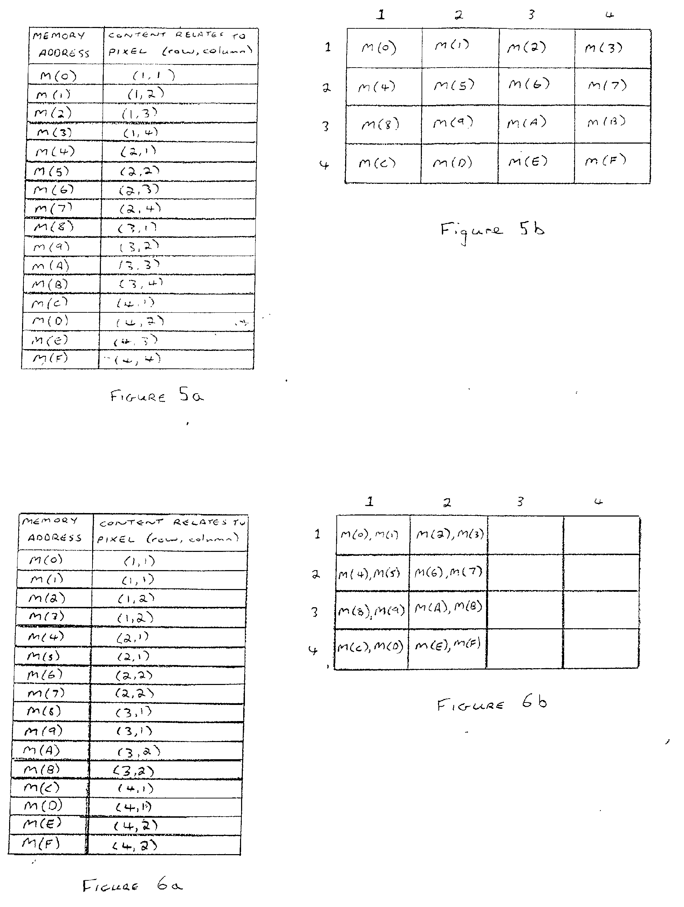

In the simplified embodiment of the invention described with reference to Figures 5a, 5b, 6a, 6b, 7a and 7b, the frame buffer 32 has 16 buffer addresses with each buffer address being able to store 9 bits of information, with the display panel 6 comprising 16 pixels arranged into a 4x4 square. Clearly, a display panel for a portable communications device will generally have many more than 16 pixels.

Figure 4 is a flow chart that shows the operation of the display system in accordance with the invention.

At step 100, the display driver 30 receives data from the controller 20. The data may comprise information relating to an image, in terms of the colour data for each pixel in the image, or to a mode control signal. The display driver 30 receives both image data and mode control signals over the same hardware interface.

The controller 20 may indicate to the display driver 30 that the information relates to a mode control signal in a number of ways, depending upon the information protocol being used over the hardware interface. In one protocol, a single pin in the interface may indicate whether the received data relates to an image or to a mode control signal.

Alternative methods of indicating that the information relates to a mode control signal will be readily apparent to a person skilled in the art.

A mode control signal will be provided to the display driver 30 by the controller 20 when it is necessary to change the mode of the display system.

Therefore, any image data preceded by a mode control signal will require a different display mode to the mode currently in use.

At step 102, it is determined if the display mode is to be changed.

If no mode control signal is received, i.e. the data relates to the next image frame, then the display mode required for the next frame is the same as the previous frame and the process moves to step 108.

If a mode control signal is received by the display driver 30, i.e. the display mode required for the next frame is different to the previous frame, the process moves to step 104.

At step 104 the display driver 30 determines how to store the data for each pixel in the image in the frame buffer 32.

Preferably, different display modes with associated mappings are preprogrammed and stored in a memory. The mappings will indicate how to store the image data in the frame buffer 32 and how the stored data should be applied to the appropriate lines on the display panel 6.

In this case, the mode control signal will indicate which of the preprogrammed modes is required and the step of determining how to store the pixel data will comprise retrieving the appropriate mappings from the memory.

Alternatively, the mode control signal may indicate the colour depth of the image (in bits/pixel) and, perhaps, the size of the image (in rows x columns), The display driver 30 determines how the image data is to be stored in the frame buffer 32 based on the capacity of each buffer address.

For example, in a first mode, where the mode control signal indicates that the colour depth (in bits/pixel) is equal to the capacity of a buffer address, it is determined that the colour data relating to each pixel in the image will be written to a separate buffer address.

In a second mode, where the mode control signal indicates that the colour depth (in bits/pixel) is greater than the capacity of a buffer address, it is determined that the colour data relating to each pixel in the image must be written to a plurality of buffer addresses. In this mode, the mode control signal may also indicate that the size of the image is less than the size of the display panel 6.

Once it has been determined how the image data is to be stored, the process moves to step 106.

At step 106, the display driver 30 synchronises the writing of the image data into the frame buffer 32 with the display panel refresh cycle.

The display panel refresh cycle operates within the display driver 30 to continuously read out the image data stored in the frame buffer 32 and apply the data to the appropriate lines in the display panel 6.

A display panel refresh cycle in conventional systems generally operates at a rate of around 60 to 80 Hz.

Once the display driver has synchronised with the display panel refresh cycle, the process moves to step 108.

At step 108, the display driver 30 writes the image data to the frame buffer 32 according to the mapping determined in step 104.

Therefore, in the first mode described above, the display driver 30 writes the data for each pixel to a separate buffer address, while in the second mode, the display driver 30 writes the data for each pixel to a plurality of buffer addresses.

In the case where the display mode is not changed from the preceding frame, the display driver 30 writes the image data to the frame buffer 32 according to the mapping used for the previous frame.

Since the display panel refresh cycle operates continuously within the display driver 30, the image data is read out continuously from the frame buffer 32. The display driver 30 reads out the data from the frame buffer 32, based upon the mapping used to store the pixel data that was determined in step 104, and applies the pixel data to the appropriate lines in the display panel 6.

In the first mode described above, the display driver 30 will retrieve the data for each pixel in the display panel 6 from a particular buffer address and apply it to the appropriate pixel in the display panel 6.

Therefore, in a conventional system whereby the number of buffer addresses equals the number of pixels in the display panel 6, every pixel in the display panel 6 will have image data associated with it and will be in use.

In the second mode described above, the display driver 30 will retrieve the data for each pixel in the image from a plurality of buffer addresses. The display driver 30 retrieves the data and applies the pixel data to the appropriate pixel in each line of the display panel 6.

Therefore, in a conventional system only some of the pixels in the display panel 6 will have image data associated with them since the data for each pixel in the image is stored at more than one buffer address and therefore there will not be a sufficient amount of memory available to store image data for every pixel in the display panel 6. So, when the image is displayed, those pixels without any associated image data will not be used for presenting any image information.

Therefore, in the second display mode, the invention displays an image with a greater colour depth and a reduced size.

The display system, 34 will continue to operate in the display mode until a new mode control signal is received.

It should be noted that in many display modes the entire frame buffer capacity will not be used in storing the image data.

'Figures 5a, 5b, 6a, 6b, 7a and 7b show possible frame buffer and display panel mappings in accordance with the invention.

Figures 5a and 5b show a frame buffer and display panel mapping in accordance with the invention.

The image data relates to an image that comprises 16 pixels (arranged into a 4x4 square), with the image data representing colour information for each pixel in the image to a depth of 9 bits/pixel, allowing 512 different colours to be displayed.

Therefore, the colour depth of the image is equal to a capacity of a buffer address. Further, the size of the image to be displayed is equal to the size of the display panel 6.

An example of a frame buffer mapping for this display mode is shown in Figure 5a.

It can be seen that when the image data is written to the frame buffer 32, each address in the frame buffer 32 will contain data relating to a different pixel. ,

For example, buffer address M(0) contains the colour data for pixel (1,1) and buffer address M(8) contains the colour data for pixel (3,1).

As each line of the display panel 6 is refreshed, the display driver 30 reads out the appropriate image data from the frame buffer 32.

Figure 5b shows the mapping used by the display driver 30 during a single refresh cycle.

When the first line of pixels in the display panel 6 is refreshed, the display driver 30 reads out the image data from buffer addresses M(0), M(1), M(2) and M(3) which contain the image data for pixels (1,1), (1,2), (1,3) and (1,4) in the display panel 6 respectively.

Similarly, when the second line of pixels in the display panel 6 is refreshed, the display driver 30 reads out buffer addresses M(4), M(5), M(6) and M(7).

Since the size of the image to be displayed in this mode is equal to the size of the display panel 6, each pixel in the display panel 6 will have image data associated with it.

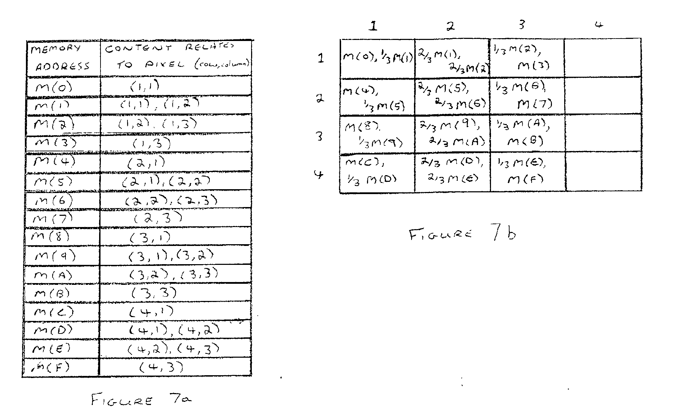

Figures 6a and 6b show a frame buffer and display panel mapping for a second mode in accordance with the invention.

The image data relates to an image that comprises 8 pixels (arranged into a 4x2 rectangle), with the image data representing colour information for each pixel in the image to a depth of 18 bits/pixel, allowing 262,144 different colours to be displayed.

Therefore, the colour depth of the image is twice the capacity of a buffer address. Further, the size of the image to be displayed is half the size of the display panel 6.

An example of a frame buffer mapping for this display mode is shown in Figure 6a.

It can be seen that, since the colour depth of a single pixel in the image is twice the size of a single buffer address, it is necessary to store the information for each pixel in the image at two separate buffer addresses.

Therefore, when the image data is written to the frame buffer 32, each address in the frame buffer 32 will contain exactly half of the data required to display a single pixel in the image.

For example, the cplour data for pixel (1,1) is stored at buffer addresses M(0) and M(1), and the colour data for pixel (4,2) is stored at buffer addresses M(E) and M(F).

As each line of the display panel 6 is refreshed, the display driver 30 reads out the appropriate image data' from the frame buffer 32.

Figure 6b shows the mapping used by the display driver 30 during a single refresh cycle.

When the first line of pixels in the display panel 6 is refreshed, the display driver 30 reads out the image data from buffer addresses M(0), M(1), M(2) and M(3) which contains the image data for pixels (1,1) and (1,2) in the display panel 6.

In this mode, the data from two separate buffer addresses is applied to a single pixel in the display panel 6. Pixels (1,3) and (1,4) do not have any image data associated with them and are not used in displaying the image.

Therefore, in this mode, exactly half of the pixels in the display panel 6 do not have image data associated with them and will not be used to display any image information.

Even though no image data is associated with half of the pixels in the display panel 6, the pixels will still be'driven by the display driver 30. In particular, the pixels that are not used for displaying image information in a display mode may be set so that they display a common colour. The colour data required for this will not need to be stored in the frame buffer 32, and, since the data will comprise the same amount of data equal to that required for displaying a single pixel, may be contained in a read-only-memory register within the display driver 30.

Alternatively, a user may specify the colour of the pixels that are not' used for displaying any image information, and this data can be stored in a command register in the display driver 30.

Figures 7a and 7b show a frame buffer and display panel mapping for a third display mode in accordance with the invention.

The image data relates to an image that comprises 12 pixels (arranged into a 4x3 rectangle), with the image data representing colour information for each pixel in the image to a depth of 12 bits/pixel, allowing 4096 different colours to be displayed.

Therefore the colour depth of the image is greater than the capacity of a buffer address. Further, the size of the image to be displayed is less than the size of the display panel 6.

An example of a mapping for this display mode is shown in Figure 7a.

It can be seen that since the colour depth of a single pixel in the image is larger than the size of a single buffer address, it is necessary to store the information for each pixel in the image at two separate buffer addresses.

The image data is stored so that each buffer address is filled with image data before any data is stored at the next buffer address. For example, the image data for pixel (1,1) is stored in buffer address M(0) and in the first three bits of buffer address M(1). The image data for pixel (1,2) is stored in the remaining six bits of buffer address M(1) and the first six bits of buffer address M(2). The image data for pixel (1,3) is stored in the remaining three bits of buffer address M(2) and buffer address M(3). The storage pattern is repeated for the other lines of pixels in the image.

Therefore, some of the buffer addresses will contain information relating to just one pixel, while other addresses will contain information relating to two pixels.

As each line of the display panel 6 is refreshed, the display driver 30 reads out the appropriate image data from the frame buffer 32.

Figure 7b shows the mapping used by the display driver 30 during a single refresh cycle.

When the first line of pixels in the display panel 6 is refreshed, the display driver 30 reads out the image data from buffer addresses M(0), M(1), M(2) and M(3) which contain the image data for pixels (1,1), (1,2) and (1,3) in the display panel 6.

In this mode, the data from parts of two separate buffer addresses is applied to a single pixel in the display panel 6. Pixel (1,4) does not have any data associated with it and is not used in displaying the image.

Therefore, in this mode, not every pixel in the display panel 6 is in use. Exactly 4 pixels in the display panel 6 do not have image data associated with them and will not be used to display any image information.

There is therefore provided an arrangement and method for providing multiple display modes allowing the display of images of differing colour depths without requiring additional memory.

## Claims

1. A display device that is operable in a plurality of modes, wherein in a first mode said device displays an image at a first size and a first colour depth and in a second mode said device displays an image at a decreased size and an increased colour depth.

2. A display device as claimed in claim 1, wherein in a third mode, said device displays an image at a decreased size and an increased colour depth, relative to the second mode.

3. A display device as claimed in claim 1 or 2, wherein the amount of display memory used in each mode is the same.

4. A display device as claimed in 1, 2 or 3, wherein the ratio of image size is inversely proportional to the ratio of colour depth for any two modes.

5. A display device as claimed in claim 1 or 2, wherein, in one mode, the image colour depth is predetermined, and the image size is calculated such that the amount of display memory used is equal to or less than a display memory capacity.

6. A display device as claimed in claim 1 or 2, wherein, in one mode, the image size is predetermined, and the image colour depth is calculated such that the amount of display memory used is equal to or less than a display memory capacity.

7. A display device as claimed in one of claims 1 to 4, wherein a mapping is provided for each display mode that comprises information regarding the storage of image data in a display memory.

8. A display device as claimed in claim 7 wherein the mapping for each mode is predetermined and stored in a memory.

9. A display device as claimed in any preceding claim, wherein the data for each pixel in the image is stored at one or more display memory addresses, according to the mode.

10. A display device as claimed in claim 9, wherein, in the second mode, said data for each pixel is stored at more than one display memory address.

11. A display device as claimed in claim 2, wherein, in the third mode, said data for each pixel is stored at more than one display memory address.

12. A display device as claimed in any preceding claim, wherein the display device further comprises:
means for receiving data;
means for determining whether the data relates to an image or to a mode control signal;
means for determining a mode required for displaying said image data based upon a received mode control signal;
means for determining the appropriate mapping for the required display mode;
means for storing the image data in the display memory according to the mapping;
means for synchronising the storage of the image data with a display panel refresh cycle; and
means for applying the stored image data to the appropriate pixels in the display panel.

13. A portable communications device that comprises a display device as claimed in any one of claims 1 to 12.

14. A portable communications device as claimed in claim 13, wherein a user may select a mode.

15. A portable communications device as claimed in claim 13, wherein the mode depends upon a status of the device.

16. A method of operating a display device, the display device comprising a display panel and a display memory, wherein said device is operating in a first display mode, the method comprising the steps of:
receiving data relating to an image;
storing the image data in a display memory using an appropriate mapping, wherein said mapping comprises information regarding the storage of image data in the display memory in the first mode; and
retrieving said image data from the display memory based on said mapping and applying it to the appropriate pixels in the display panel.

17. A method as claimed in claim 16, wherein data is received that relates to a mode control signal and the method further comprises the steps of:
determining from the received mode control signal that the display device should operate in a second display mode;
determining the mapping required for storing image data in said second mode;
synchronising the storing of the image data with a display panel refresh cycle; and
storing the image data in the display memory using the mapping appropriate to said second mode.

18. A method as claimed in claim 17 wherein the step of determining the mapping required for storing image data in said second mode comprises retrieving the mapping for the second mode from a memory.

19. A method as claimed in claim 16, 17 or 18, wherein the data relating to an image comprises information regarding the colour of each pixel in the image.

20. A method as claimed in one of claims 16 or 17, wherein the step of storing the image data comprises storing the data for a pixel in the image in parts of, or all of, one or more display memory addresses.

21. A method as claimed in claim 20, wherein the number of display memory addresses used for each pixel depends upon the mode.
